# EUROPEAN PATENT APPLICATION

(11) **EP 4 151 666 A1**
(43) Date of publication of application: **22.03.2023**
(21) Application number: 21197981.0
(22) Date of filing: 21.09.2021
(51) Int. Cl.: C08G 59/42

(54) **DEGRADABLE CURING AGENTS, COMPOSITIONS AND CURABLE COMPOSITIONS THEREOF**

(71) Applicant: VITO NV, 2400 Mol (BE)
(72) Inventor: Eevers, Walter, 2400 Mol (BE); Wróblewska, Aleksandra Alicja, 2400 Mol (BE)
(74) Representative: Arnold & Siedsma

(57) **Abstract**

The present invention relates to the field of polymers. In particular, the present invention pertains to degradable polymers, curable compositions and methods of manufacturing thereof. In particular, the present invention pertains to curing agents for epoxy resins.

## Description

### FIELD OF THE INVENTION

The present invention relates to the field of polymers. In particular, the present invention pertains to degradable polymers, curable compositions and methods of manufacturing thereof. In particular, the present invention pertains to curing agents for epoxy resins.

### BACKGROUND TO THE INVENTION

Epoxy resins have an irreplaceable position in the polymer industry because of high mechanical performance, and chemical and thermal resistance, and they are widely used in wind power and aerospace structures. In general, uncured epoxy resins have only poor mechanical, chemical and heat resistance properties. However, good properties are obtained by reacting the linear epoxy resin with suitable curatives to form three-dimensional cross-linked thermoset structures. This process is commonly referred to as curing or gelation process. This curing is what produces the qualities of the substance such as resistance, durability, versatility, and adhesion. However, their high resistance hampers recycling of epoxy resins which limits their sustainable utilization and further developments. The main challenges for epoxy resins and their composites include the design of high processability (low-viscosity) epoxy resins and cured epoxy resins with high strength and toughness that can be recycled and reused.

Morancho et al., 2020, discloses epoxy resins cured with dicarboxylic acids. A disadvantage of the cured resins thereby described is that they are difficult to implement due to crystallinity and high melting points of most dicarboxylic acids. On the other hand, the traditional epoxy resin cured with amine hardener fulfil requirement regarding the application (low viscosity liquids) but are not easily recyclable or /and reusable.

There is therefore the need for epoxy resins that are not faced with foregoing problems and that can be recycled and reused. It is an objective of the present invention is to overcome the drawbacks of the prior art.

### SUMMARY OF THE INVENTION

In a first aspect, the present invention pertains to a curable composition comprising:
- a compound A having at least 2 vinyl moieties, preferably a divinylether;
- a compound B having at least 2 carboxyl moieties, preferably 2 carboxylic acid moieties;
- a compound C having at least 1 epoxy moiety and preferably 2 or more.

Curable compositions according to the present invention provide for several advantages, in particular, compositions according to the present invention provide epoxy resins with controlled degradability and processability. Further, curable compositions according to the present invention provide for high tunability of properties of the obtainable cured reaction products, which properties (e.g. curing window, degradability, processability) can be easily tuned by modifying e.g. the type and quantity of compounds A, B and C or a catalyst. Further, the compound comprising vinyl moieties can be released during the thermal dissociation can crosslink the resin via dynamic and degradable bonds and improve thermal properties by protecting the hydroxyl group. Further, the viscosity of the composition can also be easily tuned, thereby allowing ease of use.

According to an embodiment of the present invention, compound A is a divinylether of formula (I): 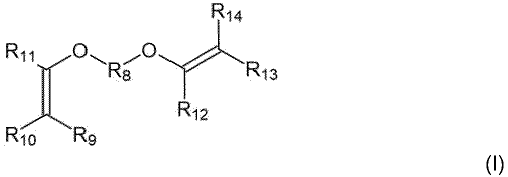 wherein, R₈, R₉, R₁₀, R₁₁, R₁₂, R₁₃, R₁₄ are groups each independently selected from the list comprising: H, linear, aromatic or cyclic alkyl, with or without heteroatoms, such as O, N, saturated or unsaturated, substituted or unsubstituted. An advantage of the present embodiment is that divinyl ethers were found to provide a low viscosity component that; - can modify other components (e.g. carboxylic acid) enabling its application in liquid epoxy resins, - can react with formed hydroxyl groups, but also act as dynamic cross-linkers, and, by doing so, provides a method to introduce re-processable moieties into epoxy resins and improves chemical resistance.

In accordance with an embodiment of the present invention, compound A is a divinylether of formula (I) wherein; R₈ is a C₃₋₆cycloalkyl, an C₁₋₆alkyl-oxy-C₁₋₆alkyl or R₈ together with one of the oxygen atoms to which it is being attached represent -{C₁₋₆alkyl-O}ₙ- wherein n is at least 2; and R₉ to R₁₄ are hydrogen.

In accordance with a further embodiment of the present invention, compound A is a divinylether, preferably selected from the list comprising: 1,4-cyclohexanemethanol divinyl ether (R₈ is cyclohexane; R₉ to R₁₄ are hydrogen), 1,4-butanediol divinyl ether (R₈ is butane; R₉ to R₁₄ are hydrogen), di(ethylene glycol) divinyl ether (R₈ is C₂alkyl-oxy-C₂alkyl; R₉ to R₁₄ are hydrogen), poly(ethyleneglycol) divinyl ether, Tri(ethylene glycol) divinyl ether (R₈ is C₂alkyl-oxy-C₂alkyl-oxy-C₂alkyl; R₉ to R₁₄ are hydrogen).

In accordance with a further embodiment of the present invention, compound B is of formula (II): 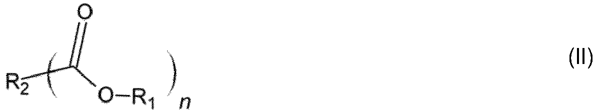 wherein,
- R₁ is independently selected from any one of: H, metal, alkyl, carbonyl; in particular R₁ is independently selected from any one of: H, metal, and alkyl: more in particular R₁ is H;
- R₂ is a group selected from: linear, aromatic or cyclic alkyl, with or without heteroatoms, such as O, N, saturated or unsaturated, substituted or unsubstituted, or R₂ represents a direct bond; in particular R₂ is a group selected from: linear or cyclic alkyl, with or without heteroatoms, such as O, N, saturated or unsaturated, substituted or unsubstituted, or R₂ represents a direct bond;
- and n ≥ 2.

In accordance with a further embodiment of the present invention, compound B is of formula (IIa): 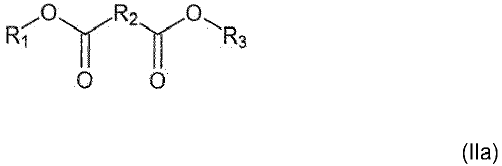 wherein,
- R₁, and R₃ are groups each independently selected from any one of: H, metal, alkyl, carbonyl; in particular R₁, and R₃ are groups each independently selected from any one of: H, metal, and alkyl; more in particular R₁, and R₃ are H;
- R₂ is a group selected from: linear, aromatic or cyclic alkyl, with or without heteroatoms, such as O, N, saturated or unsaturated, substituted or unsubstituted, or R₂ represents a direct bond; in particular R₂ is a group selected from: linear or cyclic alkyl, with or without heteroatoms, such as O, N, saturated or unsaturated, substituted or unsubstituted, or R₂ represents a direct bond;

An advantage of the present embodiment is that di(poly)carboxylic acids are widely available, very often renewable and yield esters that can be easily degraded, for example as part of recycling by solvolysis.

In accordance with an embodiment of the present invention, compound B is a dicarboxylic acid (including salts) of formula (II) wherein R₂ is a C₁₋₁₅alkyl; in particular a C₁₋₁₀alkyl.

In accordance with a further embodiment of the present invention, compound B is selected from the list comprising: glutaric acid (R₂ is propane), adipic acid (R₂ is hexane), suberic acid (R₂ is octane), azelaic acid (R₂ is nonane), sebacic acid (R₂ is decane). An advantage is their cost of goods, low toxicity and renewable character.

In accordance with a further embodiment of the present invention, compound C comprises an epoxy moiety of formula (III): 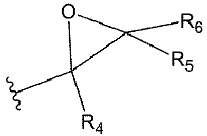 wherein R₄, R₅, R₆ are groups each independently selected from the list comprising: H, linear, aromatic or cyclic alkyl, with or without heteroatoms, such as O, N, saturated or unsaturated, substituted or unsubstituted.

In accordance with a further embodiment of the present invention, compound C is of formula (IIIa): 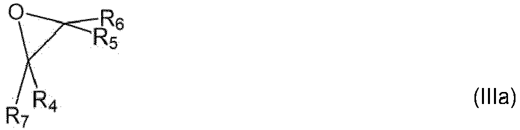 and wherein
- R₄, R₅, R₆, R₇ are groups each independently selected from the list comprising: H, linear, aromatic or cyclic alkyl, with or without heteroatoms, such as O, N, saturated or unsaturated, substituted or unsubstituted.

An advantage of the present embodiment is that epoxy components are widely available and result in materials with good mechanical properties, such as high toughness, and high cross linking density.

In a further aspect, the present invention pertains to a cured reaction product of the composition according to the present invention. Cured reaction products according to the present invention provide for several advantages, in particular, cured reaction products of the present invention provide the advantage of being both processable and degradable and yet have good mechanical properties as a consequence of being highly cross-linked.

In an embodiment of the present invention, the cured reaction product is of a polymer of any one of formulae: (VIa), (Vlb), (VIc), (Vld) and (VIe) 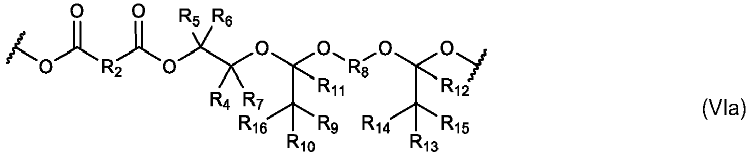 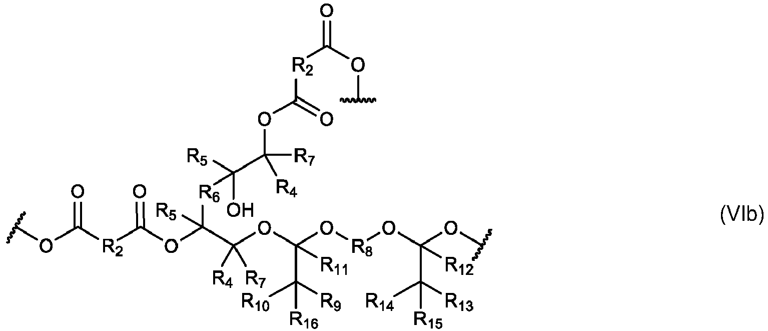 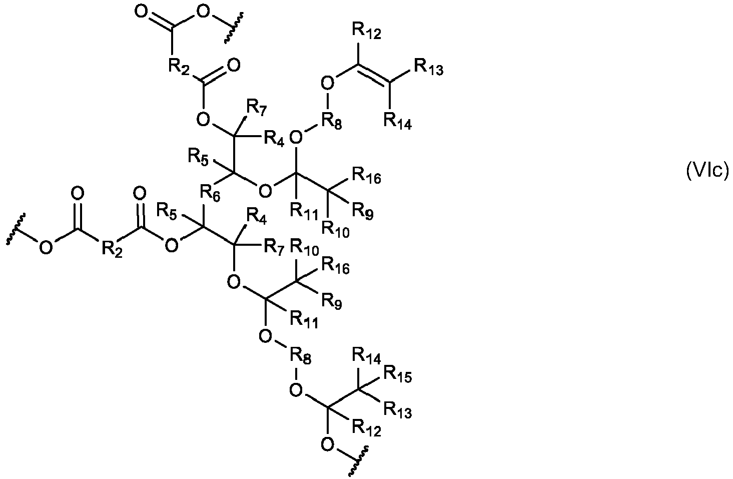 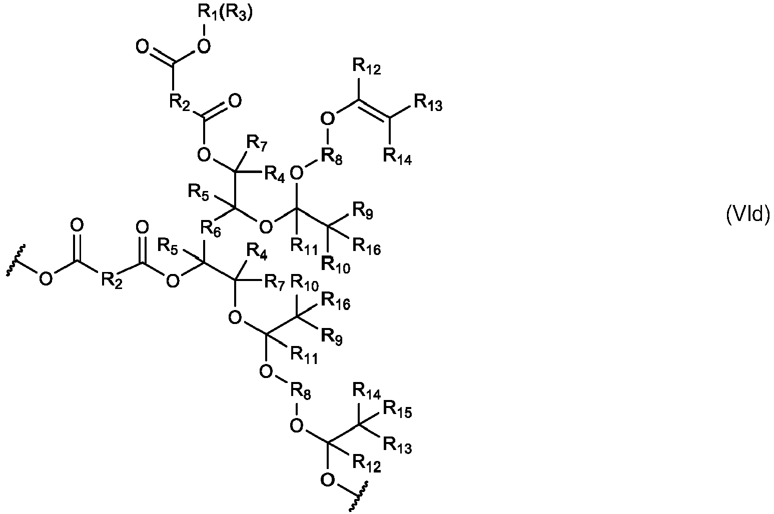 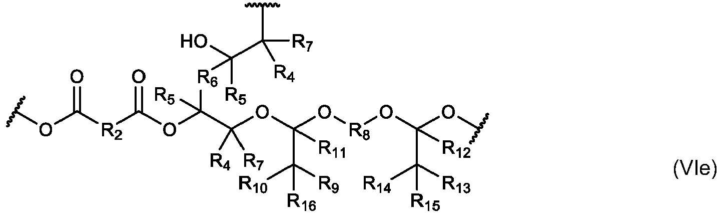 wherein
- R₂, R₄, R₅, R₆, R₇, R₈, R₉, R₁₀, R₁₁, R12, R₁₃, R₁₄ are groups defined according to any one of the embodiments herein disclosed; and R₁₅, R₁₆ are groups each independently selected from the list comprising: H, linear, aromatic or cyclic alkyl, with or without heteroatoms, such as O, N, saturated or unsaturated, substituted or unsubstituted; in particular R₁₅, R₁₆ are groups each independently selected from the list comprising: H, linear or cyclic alkyl, with or without heteroatoms, such as O, N, saturated or unsaturated, substituted or unsubstituted.

In accordance with an embodiment of the present invention, the cured product is comprising at least an equimolar amount of vinyl moieties with respect to the carboxyl moieties. It has been found that from such equimolar amount onwards, even with the slightest excess of vinyl moiety, shelf life, hydrophobicity, and chemical resistance including hydrolytic stability are improved.

In accordance with a further embodiment of the present invention, the slight excess of vinyl moieties with respect to carboxyl moieties is in a molar ratio of vinyl moiety to carboxyl moiety from 1.01:1 to 1.5:1, preferably from 1.05:1 to 1.1:1. It has been found that this embodiment is advantageous, whilst it provides a mean to avoid unreacted monomers which can crystallize (carboxylic acid component).

In accordance with a further embodiment of the present invention, the cured product is comprising an excess of carboxyl moieties respect to vinyl moieties. It has been found that an excess of carboxyl moieties provides faster curing kinetics, and improves hydrophilicity.

In accordance with yet further embodiment of the present invention, the excess of carboxyl moieties respect to vinyl moieties is according to a molar ratio vinyl moiety:carboxyl moiety from 1:1.01 to 1:1.5, preferably from about 1:1.05 to 1:1.1. It has been found that this embodiment is advantageous because it provides a mean to reach higher cross-linking density.

In a further aspect, the present invention pertains to a method for obtaining a cured product, comprising the steps of:
a) providing a curable composition comprising a compound A having at least 2 vinyl moieties, a compound B having at least 2 carboxyl moieties, preferably at least 2 carboxylic acid moieties, and a compound C having at least 1 epoxy moiety;
b) curing the curable composition provided at step a), thereby obtaining a cured product. An advantage of the present aspect is straightforward preparation of recyclable materials, without the formation of a condensate, and with a curable composition that has a considerable long shelf life.

According to an embodiment of the method of the present invention, at step b) the curable composition is a one-component resin, i.e. meaningthat the curable resin is ready to use, without needing mixing of reactive components.

### BRIEF DESCRIPTION OF THE DRAWINGS

With specific reference now to the figures, it is stressed that the particulars shown are by way of example and for purposes of illustrative discussion of the different embodiments of the present invention only. They are presented in the cause of providing what is believed to be the most useful and readily description of the principles and conceptual aspects of the invention. In this regard no attempt is made to show structural details of the invention in more detail than is necessary for a fundamental understanding of the invention. The description taken with the drawings is provided to make apparent to those skilled in the art how the several forms of the invention may be embodied in practice.
**Figure 1****,** also referred to as **Fig.** 1, illustrates a possible synthetic route to cured resins in accordance with the present invention.
**Figure 2****,** also referred to as **Fig. 2****,** illustrates the rotational flow sweep viscosity measurement at various temperatures of curable compositions from Example 10 and Example 11.
**Figure 3****,** also referred to as **Fig. 3****,** illustrates the stress relaxation (a) and relaxation time vs. temperature plot and (b) compression molding at 180°C for 30 minutes at 50 Ba.
**Figure 4****,** also referred to as **Fig. 4****,** illustrates the response of samples to a deformation at 25 °C and 80 °C (a), DMTA of samples after repeated deformations (x5) (b), cyclic creep recovery at 25° and 80°C (c) and response of the material to a deformation (Example 1-Example6) (d).
**Figure 5****,** also referred to as **Fig. 5****,** illustrates the DMTA of Example 10 and Example 11.
**Figure 6****,** also referred to as **Fig. 6****,** illustrates the relaxation times of Example 10 and Example 11.
**Figure 7****,** also referred to as **Fig. 7****,** illustrates the contact angle of Example 10 and Example 11.
**Figure 8****,** also referred to as **Fig. 8****,** illustrates the development of a Tg of example 10 and 11 during curing at 150°C.

### DETAILED DESCRIPTION OF THE INVENTION

The present invention will now be further described. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. When describing the compounds of the invention, the terms used are to be construed in accordance with the following definitions, unless a context dictates otherwise.

The term "about" or "approximately" as used herein when referring to a measurable value such as a parameter, an amount, a temporal duration, and the like, is meant to encompass variations of +/- 10 % or less, preferably +/- 5 % or less, more preferably +/- 1 % or less, and still more preferably +/- 0.1 % or less of and from the specified value, insofar such variations are appropriate to perform in the disclosed invention. It is to be understood that the value to which the modifier "about" or "approximately" refers is itself also specifically, and preferably, disclosed.

In the context of the present invention, by means of the term "curable polymer", reference is made to a polymer comprising chemical groups which are suitable to be crosslinked i.e. can undergo one or more chemical reaction providing a polymer network.

In the context of the present invention, by means of the term "dynamic polymer" or "dynamically cured polymer", reference is made to a polymer comprising covalent bonds which are adapted to exchange, thereby providing for a dynamic covalent polymer network. Dynamic covalent polymer networks combine intrinsic reversibility with the robustness of covalent bonds, creating chemically stable materials that are responsive to external stimuli. In the context of the present invention, the dynamic covalent polymer network is provided by acetal groups, which are equilibrium polymer species.

In a first aspect, the present invention pertains to a curable composition comprising:
- a compound A having at least 2 vinyl moieties, preferably a divinylether;
- a compound B having at least 2 carboxyl moieties, preferably 2 carboxylic acid moieties;
- a compound C having at least 1 epoxy moiety and preferably 2 or more.

Curable compositions according to the present invention provide for several advantages, in particular, compositions according to the present invention provide epoxy resins with controlled degradability and processability. Further, curable compositions according to the present invention provide for high tunability of properties of the obtainable cured reaction products, which properties (e.g. curing window, degradability, processability) can be easily tuned by modifying e.g. the type and quantity of compounds A, B and C. Further, the compound comprising vinyl moieties can be released during the thermal dissociation can crosslink the resin via dynamic and degradable bonds and improve thermal properties by protecting the hydroxyl group. Further, the viscosity of the composition can also be easily tuned, thereby allowing ease of use.

The term "alkyl" by itself or as part of another substituent refers to a fully saturated hydrocarbon of Formula CₓH₂ₓ₊₁ wherein x is a number greater than or equal to 1. Generally, alkyl groups of this invention comprise from 1 to 20 carbon atoms. In the context of the present invention the term "linear alkyl" includes linear or branched alkyl and may be substituted as indicated herein. When a subscript is used herein following a carbon atom, the subscript refers to the number of carbon atoms that the named group may contain. Thus, for example, C₁₋₄alkyl means an alkyl of one to four carbon atoms. Examples of alkyl groups are methyl, ethyl, n-propyl, i-propyl, butyl, and its isomers (e.g. n-butyl, i-butyl and t-butyl); pentyl and its isomers, hexyl and its isomers, heptyl and its isomers, octyl and its isomers, nonyl and its isomers; decyl and its isomers. C₁-C₆ alkyl includes all linear, or branched alkyl groups with between 1 and 6 carbon atoms, and thus includes methyl, ethyl, n-propyl, i-propyl, butyl and its isomers (e.g. n-butyl, i-butyl and t-butyl); pentyl and its isomers, and hexyl and its isomers.

The term "cycloalkyl" or "cyclic alkyl" by itself or as part of another substituent is a cyclic alkyl group, that is to say, a monovalent, saturated, or unsaturated hydrocarbyl group having 1, 2, or 3 cyclic structure. Cycloalkyl includes all saturated or partially saturated (containing 1 or 2 double bonds) hydrocarbon groups containing 1 to 3 rings, including monocyclic, bicyclic, or polycyclic alkyl groups. Cycloalkyl groups may comprise 3 or more carbon atoms in the ring and generally, according to this invention comprise from 3 to 15 atoms. The further rings of multi-ring cycloalkyls may be either fused, bridged and/or joined through one or more spiro atoms. Cycloalkyl groups may also be considered to be a subset of homocyclic rings discussed hereinafter. Examples of cycloalkyl groups include but are not limited to cyclopropyl, cyclobutyl, cyclopentyl, cyclohexyl, cycloheptyl, cyclooctyl, cyclononyl, adamantanyl and cyclodecyl with cyclopropyl being particularly preferred.

The term "aromatic alkyl" or "aryl" as used herein refers to a polyunsaturated, aromatic hydrocarbyl group having a single ring (i.e. phenyl) or multiple aromatic rings fused together (e.g. naphthalene or anthracene) or linked covalently, typically containing 6 to 10 atoms; wherein at least one ring is aromatic. The aromatic ring may optionally include one to three additional rings (either cycloalkyl, heterocyclyl, or heteroaryl) fused thereto. Aryl is also intended to include the partially hydrogenated derivatives of the carbocyclic systems enumerated herein. Non-limiting examples of aryl comprise phenyl, biphenylyl, biphenylenyl, 5- or 6-tetralinyl, 1-, 2-, 3-, 4-, 5-, 6-, 7-, or 8-azulenyl, 1- or 2-naphthyl, 1-, 2-, or 3-indenyl, 1-, 2-, or 9-anthryl, 1- 2-, 3-, 4-, or 5-acenaphtylenyl, 3-, 4-, or 5-acenaphtenyl, 1-, 2-, 3-, 4-, or 10-phenanthryl, 1- or 2-pentalenyl, 1, 2-, 3-, or 4-fluorenyl, 4- or 5-indanyl, 5-, 6-, 7-, or 8-tetrahydronaphthyl, 1,2,3,4-tetrahydronaphthyl, 1,4-dihydronaphthyl, dibenzo[a,d]cylcoheptenyl, and 1-, 2-, 3-, 4-, or 5-pyrenyl

In the context of the present invention the term " substituted " refers to a linear, aromatic or cyclic alkyl group optionally substituted with one or more substituents (for example 1 to 4 substituents, for example 1, 2, 3, or 4 substituents or 1 to 2 substituents) at any available point of attachment. Non-limiting examples of such substituents include halo, hydroxyl, carbonyl, nitro, amino, oxime, imino, azido, hydrazino, cyano, aryl, heteroaryl, cycloalkyl, acyl, alkylamino, alkoxy, thiol, alkylthio, carboxylic acid, acylamino, alkyl esters, carbamate, thioamido, urea, sullfonamido and the like.

In the context of the present invention, by means of the term "vinyl moiety", reference is made to a chemical group of formula -(CR=CR'R"), where R, R' and R" are each independently selected from the list comprising: H, linear, aromatic or cyclic alkyl, with or without heteroatoms, such as O, N, saturated or unsaturated, substituted or unsubstituted; in particular R, R' and R" represent H.

In the context of the present invention, by means of the term "carbonyl moiety", reference is made to a group which is composed of a carbon atom double-bonded to an oxygen atom: -(C=O)-. It is common to several classes of organic compounds, as part of many larger functional groups, including aldehydes, ketones, carboxylic groups, amides, and imides.

In the context of the present invention, by means of the term "carboxyl moiety", reference is made to a group which is either a carboxylic group (-(C=O)-O-H), an ester (-(C=O)-O-R₂), an anhydride (C=O)-O-(C=O)-R₂ or a salt (-(C=O)-O⁺ M⁻) thereof. Wherein in a particular embodiment R₂ is in accordance with the definitions of said substituent as herein provided.

In the context of the present invention, by means of the term "carboxylic acid moiety", reference is made to a carboxylic group (-(C=O)-O-H).

In the context of the present invention, by means of the term "epoxy moiety", reference is made to a chemical group of formula (III): 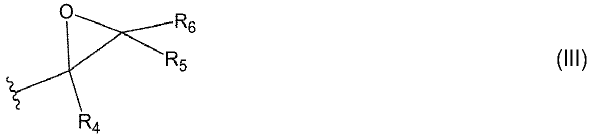 wherein R₄, R₅, R₆ are groups each independently selected from the list comprising: H, linear or cyclic alkyl, with or without heteroatoms, such as O, N, saturated or unsaturated, substituted or unsubstituted.

In the context of the present invention, by means of the term "monoepoxide", reference is made to a compound comprising a single epoxy moiety.

According to an embodiment of the present invention, compound A is of formula (I): 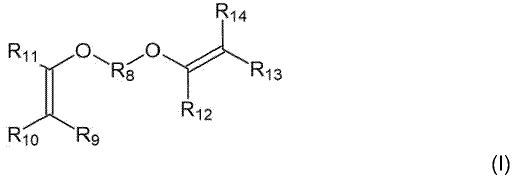 wherein, R₈, R₉, R₁₀, R₁₁, R₁₂, R₁₃, R₁₄ are groups each independently selected from the list comprising: H, linear, aromatic or cyclic alkyl, with or without heteroatoms, such as O, N, saturated or unsaturated, substituted or unsubstituted.

In accordance with a further embodiment of the present invention, compound A is divinylether, preferably selected from the list comprising: 1,4-cyclohexanemethanol divinyl ether, 1,4-butanediol divinyl ether, Di(ethylene glycol) divinyl ether, poly(ethyleneglycol) divinyl ether, Tri(ethylene glycol) divinyl ether.

In accordance with the present invention, compound B has at least 2 carboxyl moieties, preferably 2 carboxylic acid moieties. Compound B of the present invention therefore can be for example a dicarboxylic acid, tricarboxylic acid, tetracarboxylic acid, aliphatic or aromatic, and salts thereof. In case an ester of a carboxylic acid is used, conditions should be provided for its hydrolysis and hence transformation into a carboxylic acid. For example, in accordance with the present invention, dicarboxylates can also be used, provided that their ester moieties are hydrolised, e.g. in situ, thereby providing access to carboxyl moieties.

In accordance with a further embodiment of the present invention, compound B is of formula (II): 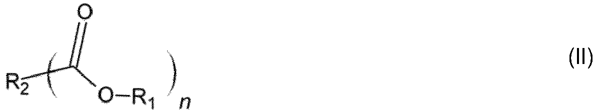 wherein,
- R₁ is independently selected from any one of: H, metal, alkyl;
- R₂ is a group selected from: linear or cyclic alkyl, with or without heteroatoms, such as O, N, saturated or unsaturated, substituted or unsubstituted, direct bond,
- and n ≥ 2.

In accordance with a further embodiment of the present invention, compound B is of formula (IIa): 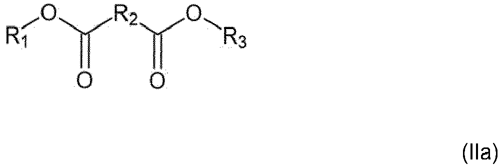 wherein,
- R₁, and R₃ are groups each independently selected from any one of: H, metal, alkyl;
- R₂ is a group selected from: linear or cyclic alkyl, with or without heteroatoms, such as O, N, saturated or unsaturated, substituted or unsubstituted, direct bond.

In accordance with the present invention, compound B can for example be selected from the group comprising ethanedioic acid, propanedioic acid, butanedioic acid, pentanedioic acid, pentanedioic acid, hexanedioic acid, heptanedioic acid, octanedioic acid, nonanedioic acid, decanedioic acid, undecanedioic acid, dodecanedioic acid, tridecanedioic acid, hexadecanedioic acid, heneicosadioic acid, docosanedioic acid, tricontanedioic acid, hemimellitic acid and citric acid.

In accordance with a further embodiment of the present invention, compound B is an aliphatic dicarboxylic acid.

In accordance with a further embodiment of the present invention, compound B is a compound according to formula (II) wherein R₂ is a C₁-C₁₅ linear alkyl chain, preferably selected from the list comprising: glutaric acid (a.k.a. pentanedioic acid), adipic acid (a.k.a. hexanedioic acid), suberic acid (a.k.a. octanedioic acid), azelaic acid (a.k.a. nonanedioic acid), sebacic acid (a.k.a. decanedioic acid). An advantage of this embodiment is that their availability, low toxicity and renewable character.

In accordance with the present invention, compound C has at least 1 epoxy moiety and preferably 2 or more epoxy moieties. Therefore, in accordance with the present invention compound C is a monoepoxide, diepoxide, triepoxide, tetraepoxide etc.

In accordance with a further embodiment of the present invention, compound C comprises an epoxy moiety of formula (III): 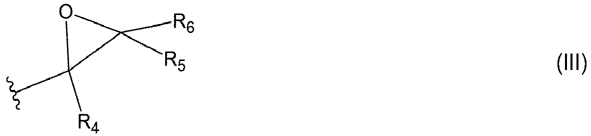 wherein R₄, R₅, R₆ are groups each independently selected from the list comprising: H, linear or cyclic alkyl, with or without heteroatoms, such as O, N, saturated or unsaturated, substituted or unsubstituted.

In accordance with a further embodiment of the present invention, compound C is of formula (IIIa): 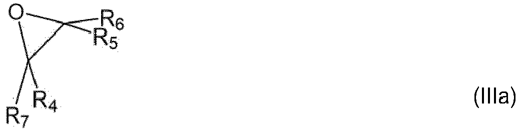 and wherein
- R₄, R₅, R₆, R₇ are groups each independently selected from the list comprising: H, linear, aromatic or cyclic alkyl, with or without heteroatoms, such as O, N, saturated or unsaturated, substituted or unsubstituted.

In accordance with a further embodiment of the present invention, compound C is of formula (IIIb): 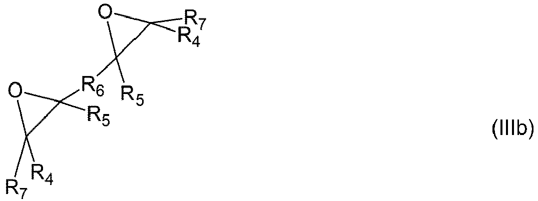 and wherein
- R₄, R₅, R₆, R₇ are groups each independently selected from the list comprising: H, linear, aromatic or cyclic alkyl, with or without heteroatoms, such as O, N, saturated or unsaturated, substituted or unsubstituted.

In accordance with an embodiment of the present invention, compound C is either a monoepoxide or a diepoxide.

In accordance with the present invention, compound C can for example be selected from the list comprising, and not limited to: bisphenol A diglycidyl ether, 1,4-Butanediol diglycidyl ether, Tris(4-hydroxyphenyl)methane triglycidyl ether, 1,2,7,8-Diepoxyoctane, Tris(2,3-epoxypropyl) isocyanurate.

In a further aspect, the present invention pertains to a cured reaction product of the composition according to the present invention. Cured reaction products according to the present invention provide for several advantages, in particular, cured reaction products of the present invention provide the advantage of being both processable and degradable and still maintain good mechanical properties of cross-linked epoxy resins.

In an embodiment of the present invention, the cured reaction product is of a polymer of any one of formulae: (VIa), (Vlb), (VIc), (Vld) and (VIe) 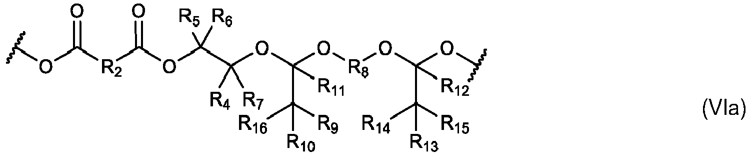 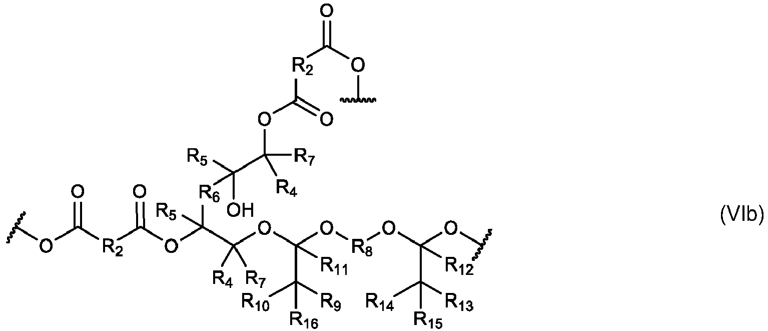 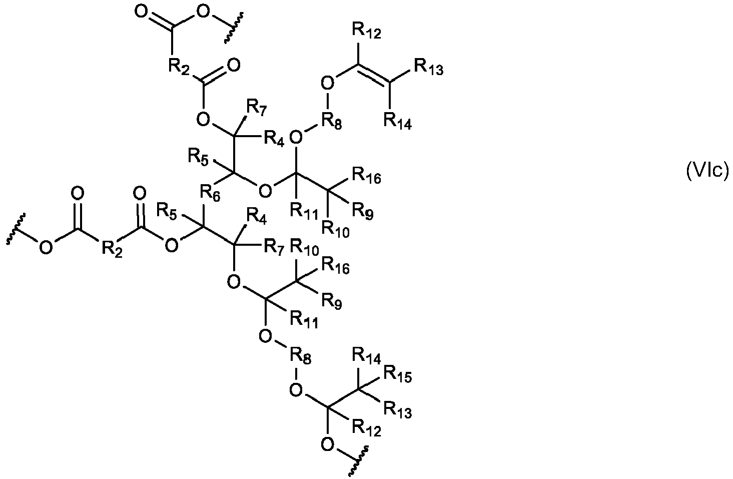 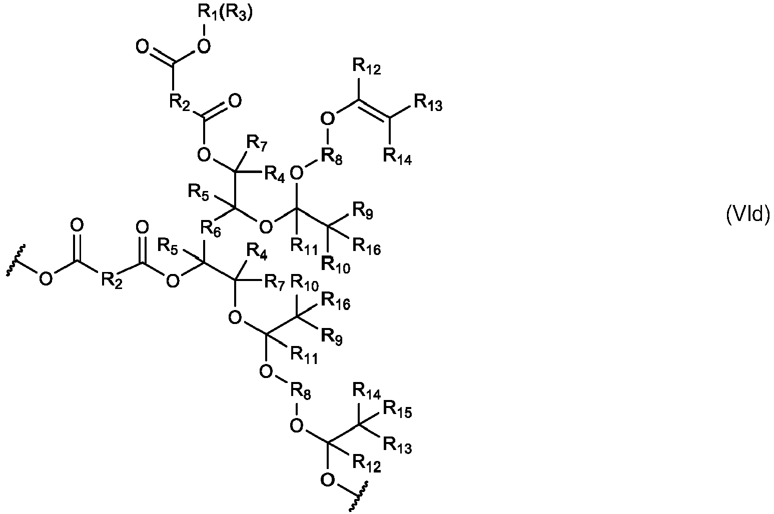 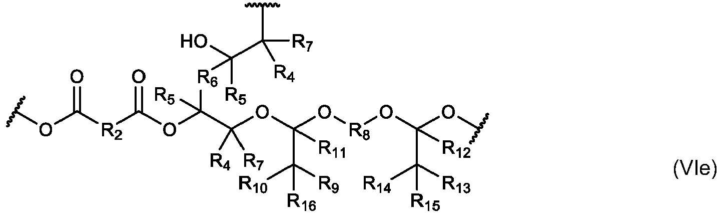 wherein
- R₂, R₄, R₅, R₆, R₇, R₈, R₉, R₁₀, R₁₁, R₁₂, R₁₃, R₁₄ are groups defined according to other embodiments of the present invention; R₁₅, R₁₆ are also groups defined according to other embodiments of the present invention.

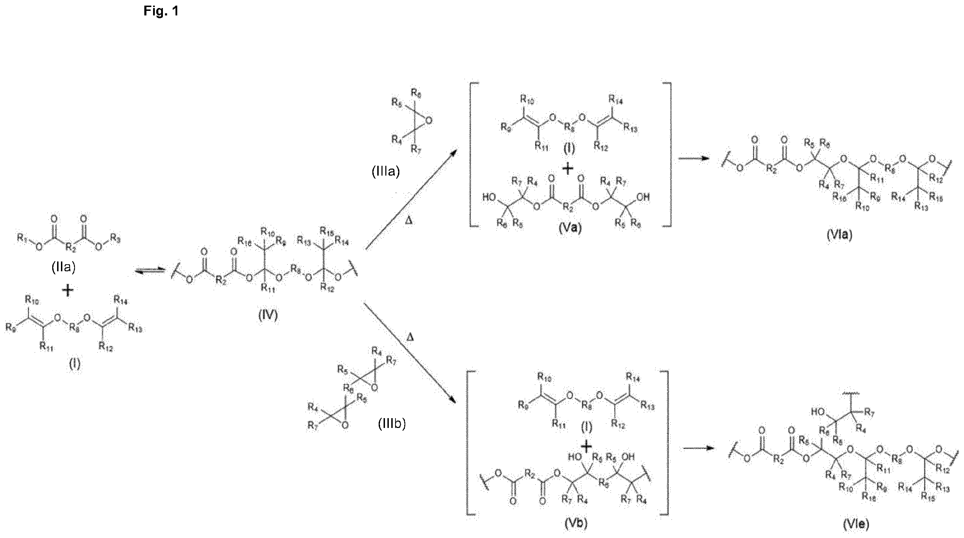

Depending on the level of crosslinking and the reactants, cured reaction products according to the present invention can comprise one or more of polymers of formula (VIa), (Vlb), (VIc), (Vld), (VIe). The cured reaction products above can be obtained according to various synthetic methods. **Fig. 1** schematically illustrates a method to obtain cure reaction products according to the present invention, wherein compound A and B are firstly admixed together and at a later stage compound C is added. Compound C is in this example either a monoepoxide or a diepoxide. The mixture obtained is then heated, leading to the cured products e.g. (VIa) and (VIe).

In accordance with an embodiment of the present invention, the cured product is comprising an excess of vinyl moieties respect to carboxyl moieties. It has been found that that an excess of vinyl moiety improve shelf life, hydrophobicity, and chemical resistance including hydrolytic stability.

In accordance with a further embodiment of the present invention, the excess of vinyl moieties respect to carboxyl moieties is in a molar ratio vinyl moiety:carboxyl moiety from 1.01:1 to 1.5:1, preferably from 1.05:1 to 1.1:1. It has been found that this embodiment is advantageous, in that the ratios herein allow to be advantageous whilst provides a mean to avoid unreacted monomers which can crystallize or evaporate during curing.

In accordance with a further embodiment of the present invention, the cured product is comprising an excess of carboxyl moieties respect to vinyl moieties. It has been surprisingly found that an excess of carboxyl moieties provide faster curing kinetics, improves hydrophilicity.

In accordance with a yet further embodiment of the present invention, the excess of carboxyl moieties respect to vinyl moieties is according to a molar ratio vinyl moiety:carboxyl moiety from 1:1.01 to 1:1.5, preferably from about 1:1.05 to 1:1.1. It has been found that this embodiment is advantageous, in that the ratios herein allow to be advantageous whilst provides a mean to avoid unreacted monomers which can crystallize or evaporate during curing.

In a further aspect, the present invention pertains to a method for obtaining a cured product, comprising the steps of:
a) providing a curable composition comprising a compound A having at least 2 vinyl moieties, a compound B having at least 2 carboxyl moieties, preferably at least 2 carboxylic acid moieties, and a compound C having at least 1 epoxy moiety;
b) curing the curable composition provided at step a), thereby obtaining a cured product.

According to an embodiment of the method of the present invention, at step b) the curable composition is a one-component resin. An advantage of the present embodiment is that the curable resin is ready to use, without needing mixing of reactive components.

Cured reaction products according to the present invention can be obtained starting from the curable composition according to the present invention, but also other composition comprising reaction intermediates of the compounds A, B and C.

For example, cured reaction products according to the present invention can be obtained from a curable composition comprising a curable polymer of formula (IV) and a compound C, as defined according to the present invention, wherein 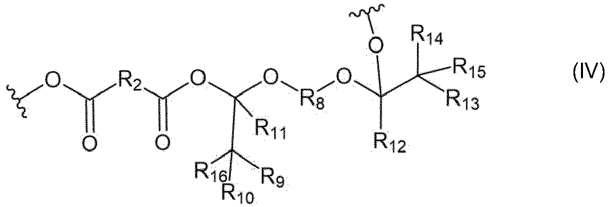 wherein:
- R₂, R₈, R₉, R₁₀, R₁₁, R₁₂, R₁₃, R₁₄ are groups defined according to any one of the embodiments of the present invention, and
- R₁₅, R₁₆ are groups selected from the list comprising: H, linear, aromatic or cyclic alkyl, with or without heteroatoms, such as O, N, saturated or unsaturated, substituted or unsubstituted.

Compound of formula (IV) can be obtained for example by reacting a compound A with a compound B, nevertheless, other synthetic methodologies might be used. For example, a method for obtaining a curable polymer of formula (IV), can comprise the steps of:
a1) providing a compound A having at least 2 vinyl moieties, and a compound B having at least 2 carboxyl moieties, preferably at least 2 carboxylic acid moieties;
b1) reacting, preferably in the presence of a catalyst, preferably an acid catalyst, the compound A and B provided at step a1), thereby forming the curable polymer of formula (IV).

Alternatively, cured reaction products according to the present invention can be obtained from a curable composition comprising a curable polymer of formula (Va) or (Vb) with a compound A. 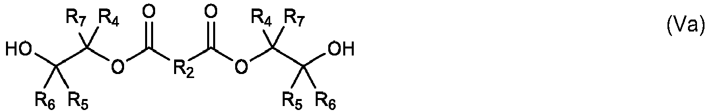 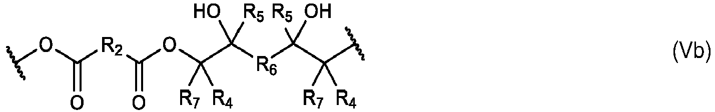 wherein:
- R₂, R₄, R₅, R₆, R₇ are groups defined according to any one of the embodiments of the present invention .

In accordance with a further embodiment of the present invention, the curable polymer of formula (IV) and compound C are heated at temperature from about 100 to 180 °C, preferably from about 130 to 150 °C. An advantage is that the composition cures with relatively fast curing rate with limited degradation phenomena.

In accordance with an embodiment of the present invention, the compound A and the compound B are firstly admixed together, and secondly compound C is added. An advantage is that first the curing polymer is formed and it is stabilized by the addition of compound C.

In accordance with an embodiment of the present invention, the compound A and the compound B are firstly admixed together for from about 0 to about 24h preferably from about 2 to about 6h, and secondly compound C is added. An advantage is that first the curing polymer is formed and it is stabilized by the addition of compound C.

### EXPERIMENTAL PART

### MATERIALS AND METHODS

### METHODS

*Nuclear magnetic resonance (NMR):* Routine ¹H NMR spectra were collected on the benchtop NMR Magritek Spinsolve Ultra 80 at 80 mhz in DMSO with 64 scans and 6.4 s acquisition time. The NMR spectra which were used for an elucidation of structure were recorder on a Bruker Avance 300 at 300 mhz for ¹H NMR and 100 mhz for ¹³C NMR in DMSO. ¹H NMR spectra were recorded with 16 scans and 4s relaxation delay. 13C NMR was recorded with 1024 scans and a relaxation delay of 2s. Corresponding 2D-HSQC spectra were recorded following standard Bruker pulse program hsqcetgpsisp2.3 with 4 scans and a relaxation delay of 4.9816s.

*Fourier transform infrared spectroscopy (FT-IR):* FTIR was measured in attenuated total reflectance mode (ATR-FTIR) on a Nicolet is10 spectrometer of Thermo Fisher. The spectra of samples and background were measured under atmospheric conditions on a diamond crystal with a spectral range of 4000 to 400 cm⁻¹. The scans were performed with a scan resolution of 4 cm⁻¹ and 32 scans per sample. Background spectra were subtracted from the sample scans prior to their analysis.

*Thermal gravimetric analysis (TGA):* TGA thermograms were measured on a TA Instruments Q500IR. The measurements were performed under a nitrogen flow rate of 25 ml min⁻¹ during a heating rate of 20 °C min⁻¹ from 50 °C to 600 °C.

*Differential scanning calorimelry (DSC):* DSC was performed on a TA Instruments Discovery DSC 250 equipped with a refrigerated cooling system (RCS). The samples were measured in Tzero pans with perforated Tzero hermetic lids to allow a nitrogen atmosphere around the sample.

*Thermal characterization:* DSC thermograms were recorded with a heating rate of 10 °C min⁻¹. Only experimental data obtained from the second heating step are reported.

*Curing process:* The DSC pan was heated with 10 °C min⁻¹ until the oven reached the test temperature and kept in isothermal conditions for 48 hours. The glass transition temperature (midpoint) was measured at equal intervals by heating and cooling rate of 10 °C min⁻¹. *Rheology*: Stress relaxation, creep recovery experiments were performed on a Discovery HR-2 hybrid rheometer of TA Instruments. The instrument was equipped with an oven surrounding the 8 mm plate-plate configuration. Stress relaxation was measured in linear viscoelastic region (LVE), a strain of 1 % was applied with an axial force of 2N or 5N. Creep-recovery experiments were performed with an alternating stress of 0 Pa (1000 s) and 3000 Pa (600 s) with an axial force of 5N.

*Tensile test:* Tensile analysis was conducted on an Instron 6800 Single column tensile tester using pneumatic clamps. 3-5 replicates were measured for each sample with dimensions of 22 x 5 x 0.6-0.7 mm. The tests were performed at room temperature and ambient conditions. The samples were dried prior to the test in the vacuum oven at 80 °C overnight. The crosshead speed was 5 mm/min.

*Contact Angle*: Contact angle was measured on a goniometer via dynamic sessile drop method in 5 places on the polymer surface.

*Liquid chromatography-mass spectrometry (LC-MS)* was performed on Thermo QExative equipped with Acquity BEH C18 column (100x2.1 mm/1.7um) using gradient solvent composition comprising 98% of 0.1%CHCOOH in H2O and 2% od CH3/IPA 70/30 in the initial stage of separation and reversed ratio in the terminal separation stage. Sample of concentration 1mg/ml in THF was injected to the column and separated at 60°C with a flow of 0.4 ml/min.

*Gel permeation chromatography (GPC)* was performed on PSS equipped with styragel HRE4 columns using THF as a solvent with polystyrene standard used for calibration curve. The samples 1mg/ml were separated at 40°C with flow of 0.8 ml/min and detected by RID and UV detector.

### MATERIALS

1,3-propylenedicarboxylic acid 99% (glutaric acid, GA), 1,4-butanedicarboxylic acid 99% (adipic acid, AA), 1,7-heptanedicarboxylic acid 98% (azelaic acid, AzA), 1,8-octanedicarboxylic acid 99% (sebacic acid, SA), 1,4-cyclohexanemethanol divinyl ether 98% (14CHD), 1,4-butanediol divinyl ether 98% (14BD), Bis[2-(vinyloxy)ethyl] ether 99% (di(ethylene glycol) divinyl ether, DEG), ethylene glycol 99% (EG) styrene oxide 97% (SO), citric acid 99% (CA), Tris(4-hydroxyphenyl)methane triglycidyl ether (TGE) and 2,2-Bis[4-(glycidyloxy)phenyl]propane (bisphenol A diglycidyl ether, BADGE) were bought from Sigma Aldrich. Tetrahydrofuran (THF), deuterated DMSO-d6 and p-toluenesulfonic acid monohydrate 99% (pTSA) were supplied by VWR. Cardolite NC514 (EEW=444 g/mol) was supplied by Cardolite.

*Stock solution pTSA:* pTSA.H₂O (1g, 5.2 mmol) was dissolved in 10 mL THF. The final concentration was 0.52mmol/1mL or 0.1g/mL.

### EXPERIMENTS

### Example 1 - Sebacic Acid (SA) - 1.4-cyclohexanemethanol divinyl ether (CHD) - 2,2-Bis[4-(glycidyloxy)phenyl]propane (BADGE)

SA (2.061 g, 10.2 mmol) and CHD (2.000 g, 10.2 mmol) were dissolved in 8mL THF. Stock solution of pTSA was added (0.96 mL, 0.50 mmol). The mixture was stirred at room temperature for 6 hours. In the course of stirring the color of the solution changed to yellow/orange. Subsequently BADGE (3.472 g, 10.2 mmol) was dissolved in 8 mL THF and added to the reaction mixture. The mixture was stirred for another hour and solvent was evaporated on the rotary evaporator at 30 °C under reduced pressure yielding 100% yellow oil which was dried in the vacuum oven at 30 °C overnight. The resulting product was then casted into a teflon mold and the rest was designated for analytical tests. The resin was cured at 150 °C for 36h at atmospheric pressure in air.

### Example 2 - Sebacic Acid (SA) - 1,4-butanediol divinyl ether (BD) - 2.2-Bis[4-(glycidyloxy)phenyl]propane (BADGE)

Sebacic Acid (SA) - 1,4-butanediol divinyl ether (BD) - 2,2-Bis[4-(glycidyloxy)phenyl]propane (BADGE) was prepared according to the Example 1. 5.000 g (24.7 mmol) of SA, 3.515 g (24.7 mmol) of BD, 8.416 g (24.7 mmol) of BADGE and 0.235 g (1.2 mmol) of pTSA was used.

### Example 3 - Azelaic Acid (AzA) - 1,4-butanediol divinyl ether (BD) - 2,2-Bis[4-(glycidyloxy)phenyl]propane (BADGE)

Azelaic Acid (AzA) - 1,4-butanediol divinyl ether (BD) - 2,2-Bis[4-(glycidyloxy)phenyl]propane (BADGE) was prepared according to the Example 1. 5.000 g (26.6 mmol) of AzA, 3.777 g (26.6 mmol) of BD, 9.043 g (26.6 mmol) of BADGE and 0.253 g (1.3 mmol) of pTSA was used.

### Example 4 - Adipic Acid (AA) - 1,4-butanediol divinyl ether (BD) - 2,2-Bis[4-(glycidyloxy)phenyl]propane (BADGE)

Adipic Acid (AA) - 1,4-butanediol divinyl ether (BD) - 2,2-Bis[4-(glycidyloxy)phenyl]propane (BADGE) was prepared according to the Example 1. 5.000 g (34.2 mmol) of AA, 3.777 g (34.2 mmol) of BD, 11.647 g (34.2 mmol) of BADGE and 0.325 g (1.7 mmol) of pTSA was used.

### Example 5 - Glutaric Acid (GA) - 1,4-butanediol divinyl ether (BD) - 2.2-Bis[4-(glycidyloxy)phenyl]propane (BADGE)

Glutaric Acid (GA) - 1,4-butanediol divinyl ether (BD) - 2,2-Bis[4-(glycidyloxy)phenyl]propane (BADGE) was prepared according to the Example 1. 5.000 g (37.8 mmol) of GA, 5.381 g (37.8 mmol) of BD, 12.883 g (37.8 mmol) of BADGE and 0.360 g (1.9 mmol) of pTSA was used.

### Example 6 - Sebacic Acid (SA) - di(ethylene glycol) divinyl ether (DEG) - 2.2-Bis[4-(glycidyloxy)phenyl]propane (BADGE)

Sebacic Acid (SA) - di(ethylene glycol) divinyl ether (DEG) - 2,2-Bis[4-(glycidyloxy)phenyl]propane (BADGE) was prepared according to the Example 1. 5.000 g (24.7 mmol) of SA, 3.910 g (24.7 mmol) of DEG, 8.416 g (24.7 mmol) of BADGE and 0.235 g (1.2 mmol) of pTSA was used..

### Example 7 - Sebacic Acid (SA) - 1.4-cyclohexanemethanol divinyl ether (CHD) - Cardolite NC514

Sebacic Acid (SA) - 1,4-cyclohexanemethanol divinyl ether (CHD) - Cardolite NC514 was prepared according to the Example 1. 3.000 g (29.7 mmol) of SA, 2.911 g (29.7 mmol) of CHD, 13.172 g (29.7 mmol) of Cardolite NC514 and 0.141 g (0.7 mmol) of pTSA was used.

### Example 8 - Sebacic Acid (SA) - 1,4-butanediol divinyl ether (BD) - Tris(4-hydroxyphenyl)methane trialycidylether (TGE)

Sebacic Acid (SA) - 1,4-butanediol divinyl ether (BD) - Tris(4-hydroxyphenyl)methane triglycidyl ether (TGE) was prepared according to the Example 1. 5.000 g (24.7 mmol) of SA, 3.515 g (24.7 mmol) of BD, 7.590 g (24.7 mmol) of TGE and 0.235 g (1.2 mmol) of pTSA was used.

### Example 9 - Citric acid (CA) - 1,4-butanediol divinyl ether (BD) - Styrene oxide (SO)

CA (5.000 g, 26.1 mmol) and BD (5.551 g, 39.0 mmol) were dissolved in 20mL THF. Stock solution of pTSA was added (0.3 mL, 0.60 mmol). The mixture was stirred at room temperature for 1 hours. In the course of stirring the color of the solution changed to yellow/orange and the solution solidified. Subsequently SO (4.690 g, 39.0 mmol) was dissolved in 8 mL THF and added to the reaction mixture. The mixture was heated above 100°C and homogenized by vigorous stirring. The homogenized mixture was poured into Teflon mold and cured for 2h at 110°C followed by 48h at 130°C.

### Example 10 - Sebacic Acid (SA) - 1.4-cyclohexanemethanol divinyl ether (CHD) - 2.2-Bis[4-(glycidyloxy)phenyl]propane (BADGE) with 10% excess of acid

Sebacic Acid (SA) - 1,4-cyclohexanemethanol divinyl ether (CHD) - 2,2-Bis[4-(glycidyloxy)phenyl]propane (BADGE) with 10% excess of acid was prepared according to Example 1. 5.000 g (24.7 mmol) of SA, 4.367 g (22.2 mmol) of CHD, 8.416 g (24.7 mmol) of BADGE and 0.235 g (1.2 mmol) of pTSA was used.

### Example 11 - Sebacic Acid(SA) - 1.4-cyclohexanemethanol divinyl ether(CHD) - 2.2-Bis[4-(glycidyloxy)phenyl]propane(BADGE) with 10% excess of vinyl

Sebacic Acid(SA) - 1,4-cyclohexanemethanol divinyl ether(CHD) - 2,2-Bis[4-(glycidyloxy)phenyl]propane(BADGE) with 10% excess of vinyl were prepared according to Example 1. 5.000 g (24.7 mmol) of SA, 5.337 g (27.1 mmol) of CHD, 8.416 g (24.7 mmol) of BADGE and 0.235 g (1.2 mmol) of pTSA was used.

### Example 12 - Glutaric Acid (GA) - 1.4-cyclohexanemethanol divinyl ether (CHD) - Styrene oxide (SO)

5.000 g (37.8 mmol) of GA, 7,428 g (37.8 mmol) of CHD, was loaded in a flask and dissolved in a THF (8mL) in a presence of a catalyst 0.1 g (0.5 mmol) pTSA. Subsequently, a 4,547 g (37.8 mmol) SO was added, the content was stirred for another hour and the solvent was evaporated. The obtained mixture was cured at 150° overnight while stirring and under nitrogen atmosphere. The obtained material contained high molar mass polymer with oligomeric fraction with combined molecular weight Mw=18300 g/mol and dispersity Ð=11.4 and was soluble in THF.

### Example 13 - Glutaric Acid (GA) - 1.4-cyclohexanemethanol divinyl ether (CHD) - Styrene oxide (SO)

Glutaric Acid (GA) - 1,4-cyclohexanemethanol divinyl ether (CHD) - Styrene oxide (SO) was prepared according to the Example 13 with different curing procedure. The sample was cured at 150°C in an oven on air. The obtained material swelled in organic solvent but was not soluble.

### Example 14- Solvolysis of polymer from Example 1

Material from Example 1 was placed in the vial with ethylene glycol (EG) and pTSA (1wt%) and heated to 90°C. The polymer dissolved after couple of minutes and the aliquots were taken after 2h and 48h.

### Example 15- Influence of vinyl:acid ratios on properties of mixtures

| | Viscosity mPa @ 50°C and shear rate 10 1/s | T*_{g,DSC}* (°C) | E⁰*_{DMTA}* (MPa) | Contact Angle (°) |
|---|---|---|---|---|
| 10%vinyl | 458 | 18.0 | 8.00 | 95.6 |
| 1:1 | 684 | 25.0 | 2.00 | - |
| 10% acid | 316 | 33.0 | 1.00 | 89.1 |

### DISCUSSION

Tables 1 and 2 here below illustrates properties of materials in Examples 1-13. A dynamic mechanical thermal analyses demonstrated that polymer from Example 1-11 and Example 13 are cross-linked and cross-linking density which is proportional to storage modulus at plateau (E⁰*_{DMTA}* (MPa)) depends on the functionality of components and their chemical structure. For example, the use of longer monomers such as 1,4-cyclohexanemethanol divinyl ether (CHD) results in polymers with lower modulus (Example 1, E⁰*_{DMTA}* =2.04 MPa) than the use of shorter 1,4-butanediol divinyl ether (BD) (Example 2, E⁰*_{DMTA}* =6.13 MPa). The use of trifunctional monomer Tris(4-hydroxyphenyl)methane triglycidyl ether (TGE) (Example 8) results in higher cross-linking density and the use of monomer with functionality 1 or with higher epoxy value (Example 7) leads to less cross-linked (Example 13) or even linear materials (Example 12) depending on the curing. The thermal properties show that variation in monomers allow to obtain materials with broad range of glass transition temperatures (*T_{g,DMTA}*) from -12.6 °C in Example 7 to 90.3 °C in Example 8 but not limited to this range. Predictably, the materials which soften at lower temperatures possess lower Young modulus and higher elongation in ambient conditions (Example 7, E'=1.74 MPa, ε=80% ) than materials with transitions occurring at higher temperatures (Example 5, E'=1800 MPa, ε=6.4%).

**Table 1: Properties of materials obtained in Examples 1-13. More specifically: E⁰_{DMTA,} T_{g,DMTA} , E', ε.**

| Entry | Composition | E⁰*_{DMTA}* (MPa) | T*_{g,DMTA}* (°C) | E' (MPa) | ε (%) |
|---|---|---|---|---|---|
| *Example 1* | ***SA,CHD,**BADGE* | 2.04 | 16.7 | 1340±72 | 6.6±1.0 |
| *Example 2* | ***SA,BD**,BADGE* | 6.13 | 28.7 | 1370±170 | 18±5.7 |
| *Example 3* | ***AzA,BD**,BADGE* | 9.11 | 32.5 | 1630±50 | 5.6±0.3 |
| *Example 4* | ***AA,BD**,BADGE* | 8.00 | 43.8 | 1860±40 | 6.3±0.3 |
| *Example 5* | ***GA,BD**,BADGE* | 8.10 | 55.4 | 1800±80 | 6.4±0.3 |
| *Example 6* | ***SA,EG**,BADGE* | 3.70 | 20.3 | 1180±120 | 81±10 |
| *Example 7* | ***SA**,**CHD**,*Ca | 0.80 | -12.6 | 1.74±0.75 | 80±12 |
| *Example 8* | ***SA,BD,TGE*** | 48.0 | 90.3 | - | - |
| *Example 9* | *CA,**BD**,SO* | - | - | - | - |
| *Example 10* | ***SA,CHD,BADGE*** | 8.5 | 30.1 | - | - |
| *Example 11* | ***SA,CHD,BADGE*** | 1.0 | 16.7 | - | - |
| *Example 12* | ***GA,CHD**,SO* | - | - | - | - |
| *Example 13* | ***GA,CHD**,SO* | 2.83 | 28.3 | - | - |

The differential scanning calorimetry (DSC) confirmed that the materials are amorphous with glass transitions (*T_{g,DSC}* in Table 2) corresponding to these observed by DMTA (*T_{g,DMTA}* in table 1). The degradation of materials starts at temperatures above 277°C (T_{5%}). The gel content determined by Soxhlet extraction of the soluble fraction by THF confirmed the high cross-linking degree which was shown by DMTA analyses.

**Table 2: Properties of materials obtained in Examples 1-14. More specifically: T_{g,DSC}, T_{5%}, Tₘₐₓ, Gel content**

| Entry | Composition | T*_{g,DSC}* (°C) | T_{5%} (°C) | Tₘₐₓ (°C) | Gel content (%) |
|---|---|---|---|---|---|
| *Example 1* | ***SA,CHD,**BADGE* | 25.0 | 304 | 430 | 84.0 |
| *Example 2* | ***SA,BD**,BADGE* | 34.0 | 277 | 429 | 95.3 |
| *Example 3* | ***AzA,BD**,BADGE* | 41.0 | 311 | -* | 99.6 |
| *Example 4* | ***AA,BD,**BADGE* | 52.0 | 279 | 417 | 98.6 |
| *Example 5* | ***GA,BD**,BADGE* | 60.0 | 299 | 439 | 99.5 |
| *Example 6* | ***SA,EG**,BADGE* | 28.0 | 275 | 426 | 94.4 |
| *Example 7* | ***SA**,**CHD**,*Ca | -10.0 | 293 | 427 | 78.9 |
| *Example 8* | ***SA**,**BD**,**TGE*** | 94.0 | 291 | 430 | 99.2 |
| *Example 9* | *CA,**BD**,SO* | | | | - |
| *Example 10* | ***SA,CHD,BADGE*** | 33.0 | 306 | 430 | - |
| *Example 11* | ***SA,CHD,BADGE*** | 18.0 | 305 | 428 | - |
| *Example 12* | ***SA,CHD**,BADGE* | 23.0 | - | - | - |
| *Example 13* | ***GA,CHD,**SO* | -9.4 | - | - | - |
| *Example 14* | ***GA,CHD,**SO* | -10.0 | - | - | - |

### Viscosity and stability measurements

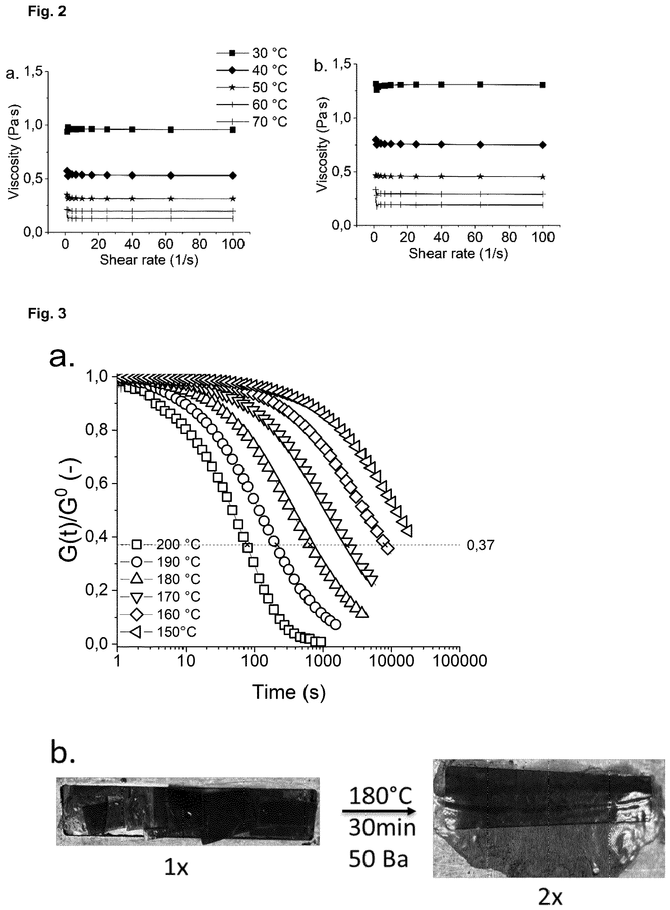

Curable compositions according to the present invention are stable and can be stored at ambient conditions for at least 28 days, and have low viscosity, allowing ease of use in various applications, e.g. coatings. In particular, **Fig. 2** illustrates the rotational flow sweep viscosity measurement at various temperatures of curable compositions from Example 10 and Example 11. Further, it has been found from measured ¹H NMR and FT-IR data (not shown) that curable composition from Example 1 in day 1 and after storage at ambient conditions for 7 and 28 days are stable. The application of other dynamic chemistries in epoxy resins very often result in high viscosity, heterogenous solutions or fast curable mixtures that do not leave a processing window for an application of a product.

### Recyclability by mechanical means

**Fig. 3** illustrates the stress relaxation (a) by rheology and recyclability under load via compression molding (b). More specifically: **Fig. 3a** shows that sample even though is fully cross-linked shows relaxation (Example 1). The stress relaxation test is a standard test which can quantitatively evaluate the potential of material to be reprocessed. The traditional cross-linked materials do not show a drop in the relaxation modulus (G(t)/G(0)) whereas dynamic networks do. As a result the epoxy resins can be reshaped and possess flow properties when heated under load **(****Fig.3b****).**

### Creep behavior

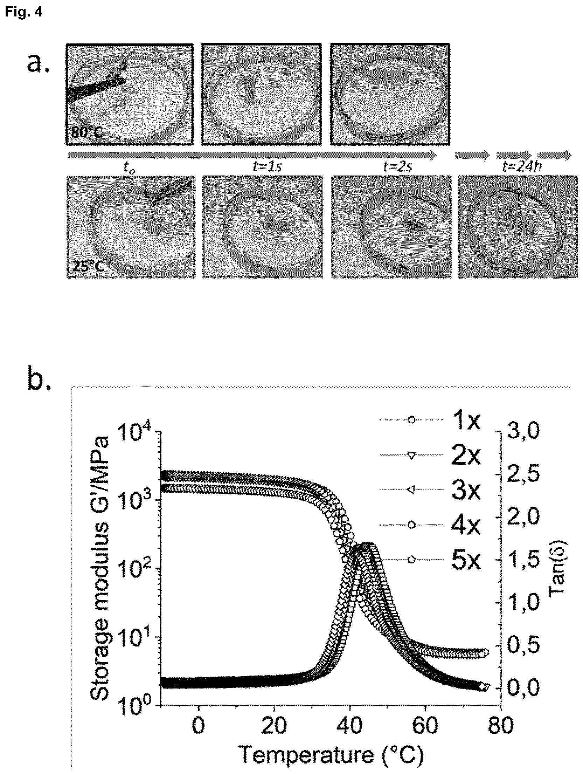

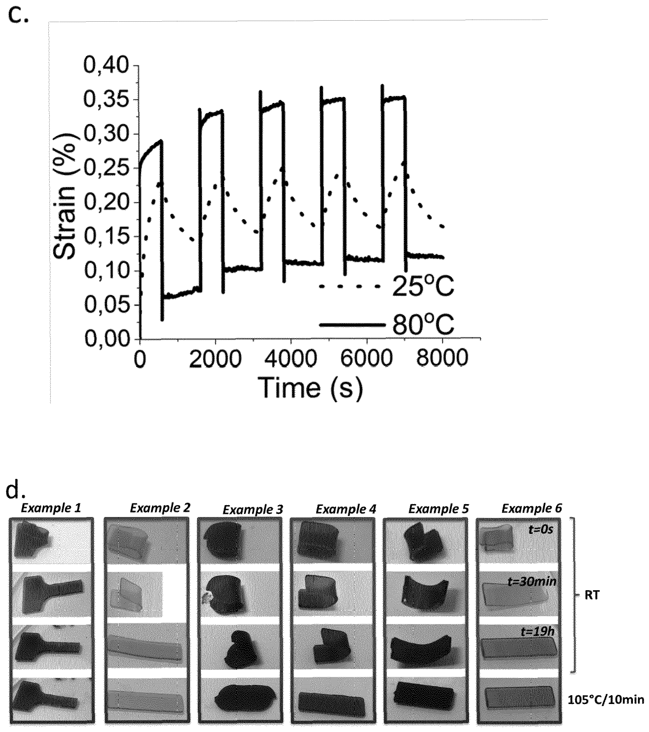

**Fig.4a** demonstrates the elastic response of the materials to the applied load at different temperatures (Example 2), DMTA curves after repeated deformations and shape recovery **(****Fig. 4b****),** creep experiment at investigated temperatures **(****Fig. 4c****)** and elastic response of selected materials to deformation **(****Fig.4d****).** The material with T_{g,DSC}= 34°C which is just above RT is able to recover the original shape in 24h after deformation. If the same material is conditioned at temperatures above its T_{g} the recovery time decreases and the full recovery is observed within seconds **(****Fig. 4a****).** The cyclic deformation-recovery experiment was conducted on a DMTA specimen **(****Fig. 4b****).** the sample was twisted and reformed at 105°C for 5 minutes. After each cycle a DMTA analyses was performed revealing little to no influence of the repeated deformation on the mechanical performance of the material. A cyclic creep recovery measurement **(****Fig. 4c****)** revealed that the material show predominant delayed elastic response at 25°C and instantaneous elastic response at 80 °C. The recovery ability of materials can be tuned by thermal properties **(****Fig. 4d****).** More specifically, materials with T_{g} below RT will show instantaneous elastic response at RT and materials with T_{g} higher than RT will show predominant delayed elastic response. All materials can be returned to the original shape by short heating stage. The property can be interesting for shock absorbing materials.

### Recyclability by chemical means

Cured reaction products according to the present invention can be chemically recycled, for example by means of solvolysis at 90°C, in accordance with Example 14. Table 3 here below illustrates an LC-MS chromatogram of the solvolysis product obtained. In Table 4, a list of the fragments obtained after solvolysis is shown.

**Table 3: An LC-MS chromatogram of a solvolysis product with an indication of which m/z regime was detected and screened and also its intensity for the two investigated reaction times, the various fragments A to H were identified.**

| Fragment | m/Z min | m/z max | I₂ₕ | I₄₈ₕ | I₄₈ₕ/I₂ₕ |
|---|---|---|---|---|---|
| A | 291,1779 | 291,1809 | 2,00E+08 | 1,50E+07 | 0,08 |
| B | 335,2045 | 335,2079 | 1,00E+07 | 8,00E+08 | 80,00 |
| C | 379,2306 | 379,2344 | 2,00E+05 | 1,00E+09 | 5000,00 |
| D | 423,2610 | 423,2610 | 4,00E+06 | 2,00E+08 | 50,00 |
| E | 547,3240 | 547,3294 | 2,50E+07 | 4,51E+08 | 18,04 |
| F | 373,2565 | 373,2603 | 1,70E+08 | 5,40E+08 | 3,18 |
| G | 580,3665 | 580,3723 | 5,50E+06 | 1,20E+09 | 218,18 |
| H | 394,2205 | 394,2245 | 2,00E+08 | 1,30E+09 | 6,50 |

With respect to the ratio I₄₈ₕ/I₂ₕ, the ratio of intensity of a signal in the regime m/zₘᵢₙ-m/zₘₐₓ at 2h (I₂ₕ) and intensity of signal at 48h (I₄₈ₕ). If I₄₈ₕ/I₂ₕ<1 means that signal decreases with a reaction time, if I₄₈ₕ/I₂ₕ>1 means that it increases.

**Table 4: The chemical structures of identified fragments (Frag.) and their molecular masses.**

| Frag. | Chemical structure | Adduct |
|---|---|---|
| A | 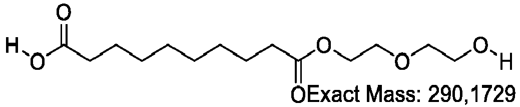 | H+ |
| B | 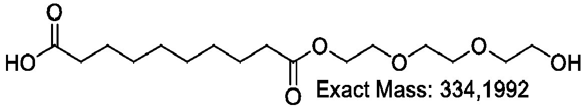 | H+ |
| C | 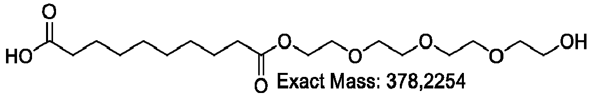 | H+ |
| D | 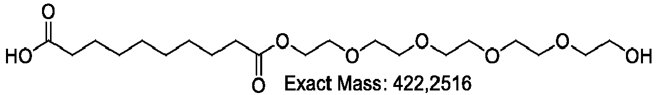 | H+ |
| E | 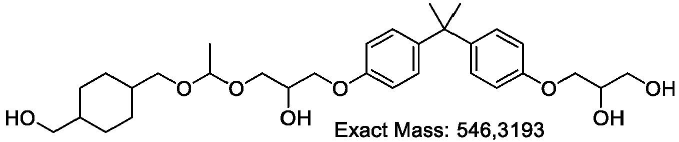 | H+ |
| F | 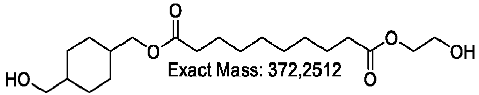 | H+ |
| G | 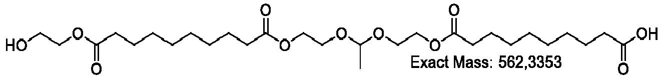 | NH₄⁺ |
| H | 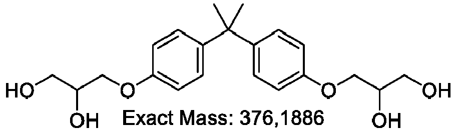 | NH₄⁺ |

### Influence of ratio of vinyl/acid groups on the properties of the cured products

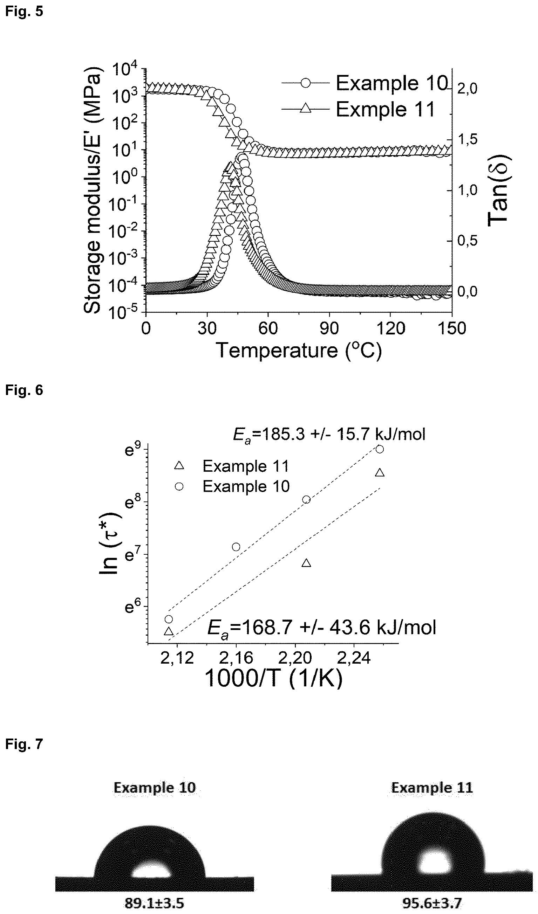

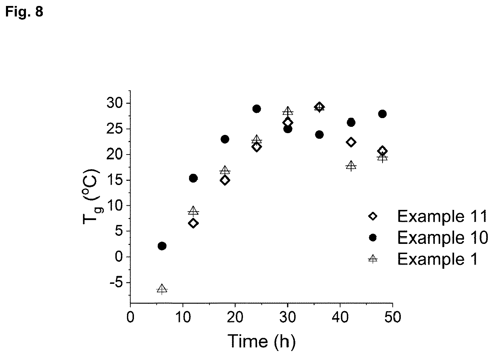

It has been found that the ratio of functional determines properties from linear to crosslinked materials, hydrophilicity/hydrophobicity, exchange rate and curing kinetics. In particular, **Fig. 5** illustrates the DMTA of Example 10 and Example 11 which demonstrates the tunability of T_{g} of material by a change of ratio of acid to vinyl component. The ratio of monomers influences the stress relaxation curves **(****Fig.6****).** In general, shorter relaxation times are obtained when an excess of vinyl is used (Example 11). **Fig. 7** illustrates the contact angle of Example 10 and Example 11. From the figure, it is apparent that the materials with an excess of vinyl groups (product of Example 11) are more hydrophobic. **Fig. 8** illustrates the development of a T_{g} of Example 10 and 11 during curing at 150°C.

### REFERENCES

1. Morancho, J. M., Ramis, X., Fernandez-Francos, X., Konuray, O., Salla, J. M., & Serra, A. (2020). Dual curing of an epoxy resin with dicarboxylic acids. Journal of Thermal Analysis and Calorimetry. doi:10.1007/s10973-020-09523-z
2. Spiesschaert, Y., Guerre, M., De Baere, I., van Paepegem, W., Winne, J.M., Du Prez, F.E., (2020). Dynamic Curing Agents for Amine-Hardened Epoxy Vitrimers with Short (Re)processing Times, Macromolecules. Doi: 10.1021/acs.macromol.9b02526

## Claims

1. A curable composition comprising:
- a compound A having at least 2 vinyl moieties, preferably a divinylether;
- a compound B having at least 2 carboxyl moieties, preferably 2 carboxylic acid moieties;
- a compound C having at least 1 epoxy moiety and preferably 2 or more.

2. The curable composition according to claim 1, wherein:
- compound A is of formula (I): 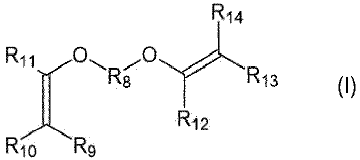 wherein,
R₈, R₉, R₁₀, R₁₁, R₁₂, R₁₃, R₁₄ are groups each independently selected from the list comprising: H, linear, aromatic or cyclic alkyl, with or without heteroatoms, such as O, N, saturated or unsaturated, substituted or unsubstituted.

3. The curable composition according to any one of claims 1 to 2, wherein compound A is a divinylether of formula (I) wherein; R₈ is a C₃₋₆cycloalkyl, an C₁₋₆alkyl-oxy-C₁₋₆alkyl or R₈ together with one of the oxygen atoms to which it is being attached represent -{C₁₋₆alkyl-O}ₙ-wherein n is at least 2; and R₉ to R₁₄ are hydrogen; preferably selected from the list comprising: 1,4-cyclohexanemethanol divinyl ether, 1,4-butanediol divinyl ether, Di(ethylene glycol) divinyl ether, poly(ethyleneglycol) divinyl ether, Tri(ethylene glycol) divinyl ether.

4. The curable composition according to any one of claims 1 to 3, wherein: compound B is of formula (II): 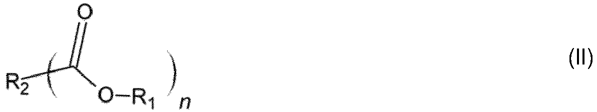 wherein,
- R₁ is independently selected from any one of: H, metal, alkyl, carbonyl;
- R₂ is a group selected from: linear, aromatic or cyclic alkyl, with or without heteroatoms, such as O, N, saturated or unsaturated, substituted or unsubstituted, direct bond,
- and n ≥ 2.

5. The curable composition according to claim 4, wherein:
- compound B is of formula (IIa): 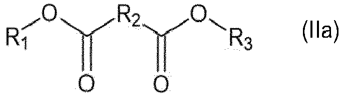 wherein,
- R₁ and R₃ are groups each independently selected from any one of: H, metal, alkyl, carbonyl;
- R₂ is a group selected from: linear, aromatic or cyclic alkyl, with or without heteroatoms, such as O, N, saturated or unsaturated, substituted or unsubstituted, direct bond.

6. The curable composition according to claim 5, wherein compound B is a dicarboxylic acid or salt thereof of formula (IIa) wherein R₂ is a C₁₋₁₅alkyl; in particular a C₁₋₁₀alkyl, and preferably selected from the list comprising: glutaric acid, adipic acid, suberic acid, azelaic acid, sebacic acid.

7. The curable composition according to any one of claims 1 to 6, wherein compound C comprises one or more of an epoxy moiety of formula (III): 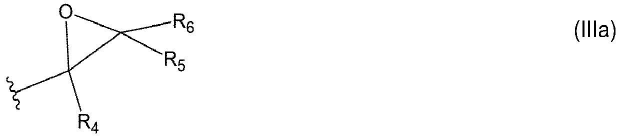 wherein R₄, R₅, R₆ are groups each independently selected from the list comprising: H, linear,n aromatic or cyclic alkyl, with or without heteroatoms, such as O, N, saturated or unsaturated, substituted or unsubstituted.

8. The curable composition according to claim 7, wherein compound C Is selected from the list comprising: Bisphenol A diglycidyl ether, 1,4-Butanediol diglycidyl ether, Tris(4-hydroxyphenyl)methane triglycidyl ether, 1,2,7,8-Diepoxyoctane, Tris(2,3-epoxypropyl) isocyanurate.

9. A cured reaction product of the composition according to any one of claims 1 to 8.

10. The cured product according to claim 9, comprising at least an equimolar amount of vinyl moieties with respect to the carboxyl moieties; in particular wherein the vinyl moieties and the carboxyl moieties are in a molar ratio vinyl moiety:carboxyl moiety from 1.01:1 to 1.5:1, preferably from 1.05:1 to 1.1:1.

11. The cured product according to claim 9, comprising an excess of carboxyl moieties with respect to the vinyl moieties; in particular wherein the vinyl moieties and the carboxyl moieties are in a molar ratio vinyl moiety:carboxyl moiety from 1:1.01 to 1:1.5, preferably from about 1:1.05 to 1:1.1.

12. The cured reaction product according to any one of claims 9 to 11, comprising a polymer of any one of formulae: (VIa), (Vlb), (VIc), (Vld) and (VIe) 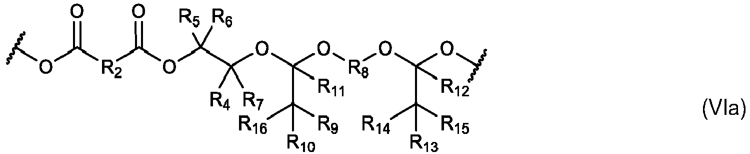 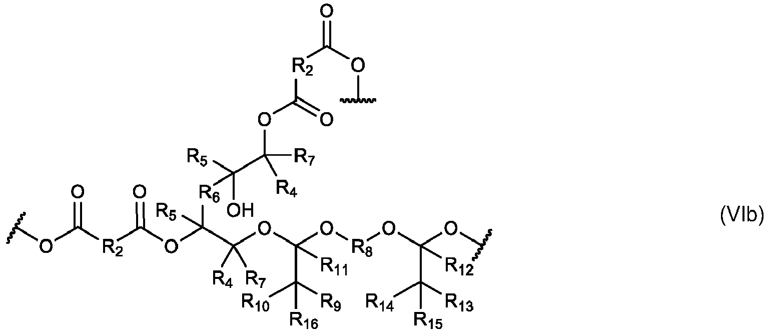 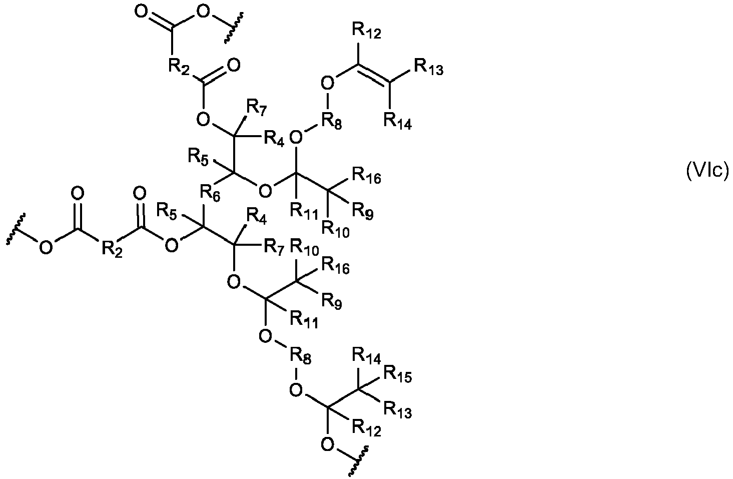 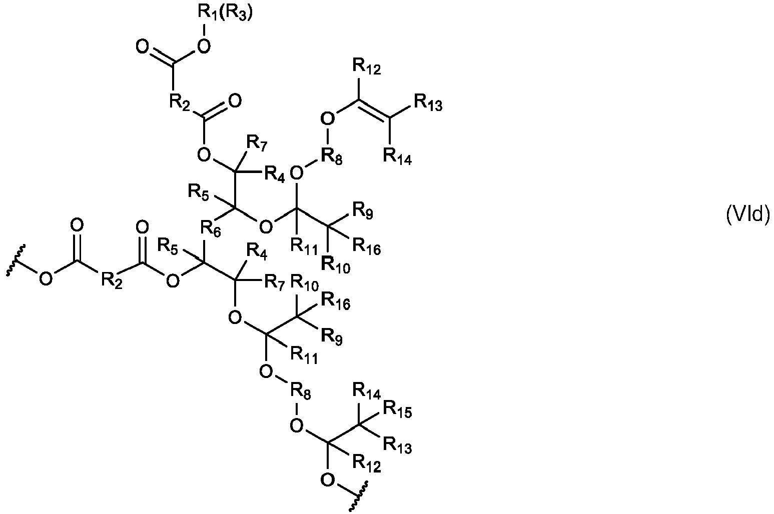 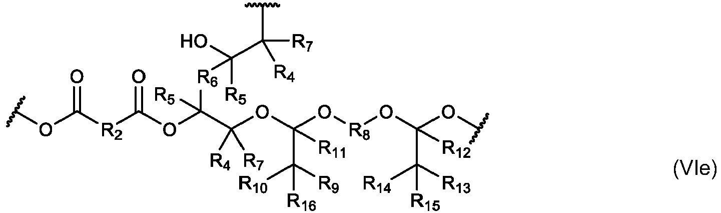 wherein
- R₂, R₄, R₅, R₆, R₇, R₈, R₉, R₁₀, R₁₁, R₁₂, R₁₃, R₁₄ are groups defined according to any one of claims 1 to 6; and R₁₅, R₁₆ are groups each independently selected from the list comprising: H, linear, aromatic or cyclic alkyl, with or without heteroatoms, such as O, N, saturated or unsaturated, substituted or unsubstituted.

13. A method for obtaining a cured product according to any one of claims 9 to 12, comprising the steps of:
a) providing a curable composition comprising a compound A having at least 2 vinyl moieties, a compound B having at least 2 carboxyl moieties, preferably at least 2 carboxylic acid moieties, and a compound C having at least 1 epoxy moiety;
b) curing the curable composition provided at step a), thereby obtaining a cured product.

14. The method according to claim 13, wherein at step b) the curable composition is a one-component resin.

15. The method according to any one of claims 13 to 14, wherein at step a) the curable composition is provided by firstly admixing compound A and the compound B together, and secondly adding compound C.
